# FASCICULE DE BREVET EUROPEEN

(11) **EP 0 541 447 B1**
(45) Date de publication et mention de la délivrance du brevet: **07.02.1996**
(21) Numéro de dépôt: 92402997.8
(22) Date de dépôt: 05.11.1992
(51) Int. Cl.: B64C 27/12, B60T 13/58

(54) **Ensemble de freinage de rotor de giravion**
Rotorbremse-Einheit eines Drehflügelflugzeuges
Rotorcraft rotor brake unit

(30) Priorité: 07.11.1991 FR 9113741
(43) Date de publication de la demande: 12.05.1993
(73) Titulaire: AEROSPATIALE Société Nationale Industrielle, F-75781 Paris Cédex 16 (FR)
(72) Inventeur: Aubry, Jacques Antoine, F-13480 Cabries (FR); Bonfils, Michel Robert, F-13760 Saint Cannat (FR)
(74) Mandataire: Poulin, Gérard

(56) Documents cités:
- EP-A- 0 206 447
- EP-A- 0 286 504
- FR-E- 76 374
- US-A- 4 798 052

## Description

L'invention concerne un ensemble de freinage conçu pour être utilisé sur un giravion afin d'assurer l'arrêt du rotor aussitôt que l'appareil est posé.

En effet, au fur et à mesure que la vitesse de rotation du rotor d'un hélicoptère diminue avant son arrêt total, la commande cyclique permettant de contrôler l'assiette du disque rotor perd de son efficacité.

Il convient donc que la phase de ralentissement et d'arrêt du rotor soit la plus courte possible pour réduire le risque qu'une rafale de vent fasse basculer le disque rotor sans que le pilote puisse s'y opposer totalement par la commande cyclique, les pales pouvant alors venir heurter des passagers quittant l'appareil ou des spectateurs imprudents se précipitant vers celui-ci avant que le rotor ne soit complètement arrêté. Ce risque est particulièrement important sur les appareils légers dont les rotors sont situés assez près du sol.

Il convient par ailleurs, qu'une fois arrêté, le rotor puisse rester freiné de façon à éviter de tourner sous l'effet du vent.

Le frein de rotor d'un hélicoptère est habituellement disposé sur la chaîne cinématique d'entraînement du rotor principal ou du rotor de queue. La commande du frein est réalisée au moyen d'une manette qui est généralement située au plafond du poste de pilotage de l'appareil. La manoeuvre de cette manette doit permettre au pilote d'arrêter rapidement le rotor sans que le freinage de ce dernier n'ait besoin d'être dosé. Au contraire, le pilote doit pouvoir libérer le plus rapidement possible la main qui lui a servi à manoeuvrer la manette, afin de maintenir le rotor dans un plan sensiblement horizontal, au moyen du manche cyclique, pendant l'arrêt du rotor, sa seconde main étant alors occupée par la manoeuvre du levier de pas général.

Pour remplir cette fonction, on a généralement recours, sur les hélicoptères légers, à un ensemble de freinage entièrement mécanique, grâce auquel des garnitures de friction ancrées sur un organe support non rotatif sont appliquées contre un disque de freinage fixé sur un arbre lié à la chaîne cinématique d'entraînement en rotation des rotors de l'hélicoptère. Ce mécanisme est tel que le blocage du rotor est maintenu tant que la manette de commande n'est pas ramenée dans son état initial. Cet ensemble de freinage mécanique comporte habituellement des moyens permettant de limiter l'effort de freinage, afin de le maintenir à une valeur constante, ainsi que des moyens de rappel constitués par un ressort grâce auquel les garnitures de friction sont automatiquement écartées du disque lorsque la manette est ramenée dans sa position initiale.

Bien qu'un tel ensemble de freinage donne généralement satisfaction, il a pour inconvénient, en raison de son caractère totalement mécanique, de ne pas permettre d'amplifier l'effort appliqué par le pilote sur la manette de commande, de telle sorte que l'effort d'application des garnitures de friction sur le disque est faible et que l'arrêt du rotor n'est pas aussi rapide que le pilote le souhaiterait.

Par ailleurs, l'utilisation d'une commande hydraulique, qui permettrait de résoudre ce problème, est considérée comme inadaptée, compte tenu de l'implantation fréquente de la manette de commande au plafond de la cabine de pilotage où il n'est pas recommandé d'installer des dispositifs hydrauliques en raison des risques de fuite d'huile.

L'invention a précisément pour objet un ensemble de freinage de rotor de giravion permettant de résoudre les inconvénients précités des ensembles de freinage entièrement mécaniques existants, et notamment d'assurer une amplification de l'effort de freinage appliqué sur la manette de commande, sans pour autant avoir recours à des systèmes complexes tels qu'une assistance hydraulique et sans introduire de l'hydraulique sous pression à proximité de la manette de commande.

Conformément à l'invention, ce résultat est obtenu au moyen d'un ensemble de freinage de rotor de giravion, comprenant un disque apte à tourner avec le rotor, au moins une garniture de friction ancrée sur un organe support non rotatif, des moyens de freinage aptes à appliquer la garniture de friction contre au moins une face du disque, un organe de commande placé dans le poste de pilotage du giravion, et des moyens de transmission reliant l'organe de commande aux moyens de freinage, caractérisé par le fait que les moyens de transmission sont mécaniques et par le fait que les moyens de freinage comprennent au moins un actionneur hydraulique à amplificateur d'effort, intégré audit organe support.

Dans cet ensemble de freinage, l'actionneur hydraulique comporte avantageusement un piston moteur directement lié aux moyens de transmission mécaniques, un piston libre agissant sur la garniture de friction et ayant une section supérieure à celle du piston moteur, et une chambre de commande formée dans l'organe support entre le piston moteur et le piston libre.

De préférence, au moins un passage relie la chambre de commande à un réservoir de fluide hydraulique qui peut être extérieur à l'actionneur hydraulique ou, au contraire, intégré à l'organe support.

Comme dans les ensembles de freinage existants, des moyens limiteurs d'efforts sont avantageusement prévus entre l'organe de commande et la garniture de friction.

Dans un premier mode de réalisation de l'invention, ces moyens limiteurs d'efforts sont situés dans les moyens de transmission mécaniques et le passage qui relie le réservoir à la chambre de commande est obturé par le piston moteur lorsque ce dernier n'est pas dans une position de relâchement du frein.

Selon un deuxième mode de réalisation de l'invention, les moyens limiteurs d'efforts sont intégrés à l'actionneur hydraulique. Le passage par lequel le réservoir communique avec la chambre de commande comporte alors un clapet de surpression dont l'ouverture se produit automatiquement lorsque la pression dans la chambre de commande atteint une valeur supérieure à une pression d'actionnement des moyens limiteurs d'efforts.

Dans ce cas, les moyens limiteurs d'efforts comprennent avantageusement un troisième piston soumis aux actions antagonistes de la pression régnant dans la chambre de commande et de moyens élastiques.

Par ailleurs, dans ce deuxième mode de réalisation de l'invention, la chambre de commande communique également avec le réservoir par un second passage normalement fermé par un clapet anti-retour autorisant un passage de fluide hydraulique du réservoir dans la chambre de commande lorsque la pression dans cette dernière descend en dessous d'un seuil inférieur à une dépression prédéterminée.

Selon une réalisation préférentielle, l'organe support est constitué par un étrier fixe chevauchant le disque et ce dernier est monté coulissant selon son axe. L'étrier supporte alors un actionneur hydraulique qui agit directement sur une première garniture de friction adjacente à une première face du disque et, par l'intermédiaire du disque coulissant, sur une deuxième garniture de friction adjacente à la deuxième face du disque.

On décrira à présent, à titre d'exemples non limitatifs, deux modes de réalisation de l'invention, en se référant aux dessins annexés, dans lesquels :
- la figure 1 est une vue, en coupe transversale partielle, représentant de façon schématique un ensemble de freinage de rotor de giravion réalisé conformément à un premier mode de réalisation de l'invention ;
- la figure 2 est une vue en coupe transversale représentant le frein à disque d'un ensemble de freinage réalisé selon un deuxième mode de réalisation de l'invention ; et
- la figure 3 est une vue en coupe selon la ligne III-III de la figure 2.

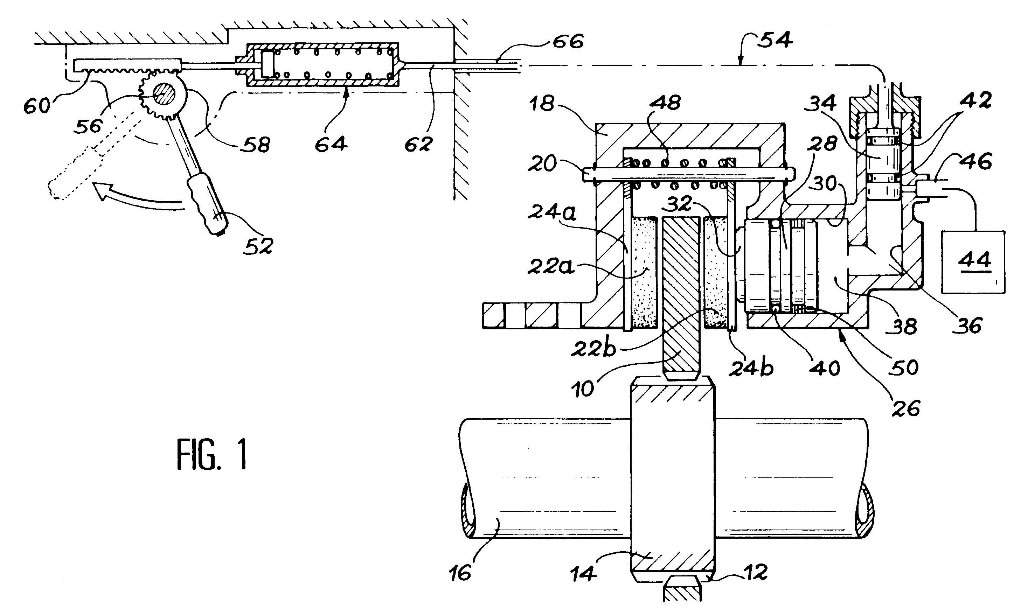

Sur la figure 1, la référence 10 désigne un disque de frein qui est monté sur des cannelures 12 formées sur une bride d'entraînement 14 solidaire de l'arbre 16 faisant partie de la chaîne cinématique d'entraînement en rotation des rotors d'un hélicoptère, par exemple l'arbre qui assure la transmission entre la boîte de transmission principale et le rotor arrière de l'appareil. Le montage du disque 10 sur la bride d'entraînement 14 par les cannelures 12 a pour effet de solidariser le disque 10 en rotation de l'arbre 16 et, par conséquent, des rotors de l'hélicoptère, tout en autorisant un déplacement du disque 10 parallèlement à l'axe de l'arbre 16.

En plus du disque de freinage 10, l'ensemble de freinage représenté sur la figure 1 comprend un organe support 18 constitué par un étrier chevauchant le disque 10 et assujetti à une structure fixe de l'hélicoptère (non représentée), par exemple au moyen de boulons.

Dans sa partie située au-delà du bord périphérique du disque 10, l'organe support 18 est traversé parallèlement à l'axe du disque par deux broches 20 qui assurent le support et l'ancrage de deux garnitures de friction 22a, 22b placées en vis-à-vis de chacune des faces du disque 10. Plus précisément, chacune des garnitures de friction 22a, 22b est portée par une plaquette 24a, 24b respectivement, et les broches 20 traversent des parties des plaquettes 24a et 24b situées au-delà du bord périphérique du disque 10.

La fixation de l'organe support 18 sur une partie fixe de l'hélicoptère s'effectue du côté de cet organe adjacent à la garniture de friction 22a et un actionneur hydraulique 26, à amplification d'effort, est intégré à l'organe support 18 du côté adjacent à la garniture de friction 22b.

De façon plus précise, l'actionneur hydraulique 26 comporte un piston libre 28 qui est reçu de façon coulissante dans un alésage 30 usiné dans l'organe support 18, selon un axe parallèle à l'axe du disque 10, en face de la garniture de friction 22b. Cet alésage 30 débouche du côté de la garniture de friction 22b, de telle sorte que le piston libre 28 est en appui sur la plaquette 24b par l'intermédiaire d'un élément 32 réalisé en un matériau thermiquement isolant.

L'actionneur hydraulique 26 comporte également un piston moteur 34 qui est reçu de façon coulissante dans un deuxième alésage 36 usiné dans l'organe support 18 et communiquant avec l'alésage 30 pour former avec ce dernier une chambre de commande 38. Dans le mode de réalisation représenté sur la figure 1, l'alésage 36 est orienté selon une direction perpendiculaire à l'axe du disque 10. Cependant, cette orientation n'est pas impérative et l'axe de l'alésage 36 pourrait être orienté d'une façon différente, par exemple coaxialement à l'axe de l'alésage 30.

La section du piston moteur 34 est inférieure à la section du piston libre 28, de telle sorte que, lorsque la chambre de commande 38 est remplie de fluide hydraulique, tout effort transmis au piston moteur 34 est amplifié lorsqu'il est appliqué par le fluide hydraulique au piston libre 28.

Le piston libre comporte sur sa surface extérieure une gorge dans laquelle est reçu un joint d'étanchéité annulaire 40. De façon comparable, le piston moteur comporte sur sa surface extérieure deux gorges dans lesquelles sont reçus des joints d'étanchéité annulaires 42. Les joints 40 et 42 garantissent l'isolement de la chambre de commande 38 par rapport à l'extérieur.

Par ailleurs, la chambre de commande 38 communique avec un réservoir 44 de fluide sous pression, situé à l'extérieur de l'organe support 18, par un passage 46 qui débouche dans l'alésage 36 en un emplacement situé à proximité du joint 42 le plus proche de la chambre de commande 38, lorsque le piston moteur 34 occupe sa position de relâchement du frein illustrée sur la figure 1. Dans ces conditions, le réservoir 44 communique donc avec la chambre de commande 38. En revanche, tout déplacement du piston moteur 34 résultant d'un actionnement de l'ensemble de freinage a pour effet d'interrompre la communication entre le passage 46 et la chambre de commande 38. Le joint 42 le plus éloigné de la chambre de commande 38 préserve alors l'étanchéité du réservoir 44, vis-à-vis de l'extérieur.

Le réservoir hydraulique 44, qui a pour fonction de compenser les variations de volume de fluide hydraulique dans la chambre de commande 38 sous l'effet des dilatations thermiques, de fuites éventuelles ou de l'usure des garnitures de friction 22a, 22b, peut notamment être constitué par le réservoir de l'installation hydraulique de l'hélicoptère.

Dans le mode de réalisation illustré sur la figure 1, un ressort de rappel 48 est monté sur l'une au moins des broches 20, entre les plaquettes 24a et 24b, de façon à solliciter des garnitures de friction 22a et 22b en écartement l'une de l'autre. Les garnitures de friction 22a et 22b sont ainsi automatiquement écartées du disque 10 lorsque l'effort de freinage est relâché. Cependant, un rattrapage automatique de l'usure des garnitures 22a et 22b est alors assuré au moyen d'un jonc 50 monté avec un certain jeu axial dans une gorge formée sur la surface extérieure du piston libre 28. Ce jonc 50 est en prise avec la surface intérieure de l'alésage 30 et présente une forme telle qu'il autorise le déplacement du piston libre 28 vers le disque 10, tout en s'opposant au déplacement du piston 28 en sens inverse avec une force supérieure à l'effort de rappel exercé par le ressort 48, lorsque le jeu axial précité a été rattrapé.

Dans un autre mode de réalisation (non représenté), le ressort de rappel 48 est supprimé, ainsi que le jonc 50. Dans ce cas, l'écartement automatique des garnitures de friction 22a et 22b par rapport au disque 10 est obtenu du fait du voilage naturel de ce dernier. Aucun rattrapage automatique de l'usure des garnitures de friction n'est donc nécessaire.

L'ensemble de freinage illustré sur la figure 1 comprend de plus une manette de commande 52, placée dans la cabine de pilotage d'un hélicoptère, le plus souvent au plafond, ainsi que des moyens de transmission 54, totalement mécaniques, par lesquels un mouvement de la manette 52 est transmis directement au piston moteur 34.

De façon plus précise, la manette de commande 52 est articulée sur un axe 56, de façon à pouvoir pivoter d'environ 45° entre une position de repos illustrée sur la figure 1 et une position d'actionnement de l'ensemble de freinage. Lors de son basculement, la manette de commande 52 entraîne en rotation un pignon 58 engrèné sur une crémaillère 60 formant l'une des extrémités des moyens de transmission 54.

La crémaillère 60 est reliée à l'extrémité d'un organe de commande souple 62, tel qu'une lame flexible en acier inoxydable, au travers de moyens limiteurs d'efforts 64 constitués par une bielle élastique. L'organe de commande souple 62 chemine ensuite à l'intérieur d'une gaine 66 fixée à la structure de l'hélicoptère, par exemple entre deux rangées de billes selon une technique connue. L'extrémité opposée de l'organe de commande souple 62 est fixée directement au piston moteur 34.

La mise en oeuvre de l'ensemble de freinage qui vient d'être décrit en se référant à la figure 1 va à présent être expliquée.

Au repos, les différents éléments constituant l'ensemble de freinage occupent les positions illustrées sur la figure 1. En particulier, la manette de commande 52 occupe sa position de repos, les deux garnitures de friction 22a, 22b sont légèrement décollées du disque 10 et la chambre de commande 38 communique avec le réservoir 44 par le passage 46.

Lorsque le pilote actionne la manette de commande 52 pour l'amener dans sa position de freinage, indiquée en pointillé sur la figure 1, la crémaillère 60 entraîne l'organe de commande souple 62 par l'intermédiaire des moyens limiteurs d'efforts 64, de telle sorte que le piston moteur 34 se déplace vers le bas dans l'alésage 36 en considérant la figure 1. Sous l'effet de ce déplacement, l'effort de freinage est transmis au piston libre 28 par le fluide hydraulique contenu dans la chambre de commande 38, alors isolée du réservoir 44 par la fermeture du passage 46. Un effet d'amplification de l'effort exercé sur le piston moteur 34 est obtenu par la différence des sections entre les pistons 34 et 28. La manette de commande 52 peut donc être manoeuvrée plus facilement avec un faible effort.

L'effort exercé sur le piston libre 28 a pour effet d'appliquer la garniture de friction 22b contre la face en vis-à-vis du disque 10 et de faire coulisser ce dernier selon son axe, pour appliquer sa face opposée contre la garniture de friction 22a. Un effort de freinage est ainsi obtenu, dont la valeur est limitée à un effort et à un couple de freinage déterminés par les moyens limiteurs d'efforts 64 placés dans les moyens de transmission mécaniques 54. Le blocage du frein entraînant l'immobilisation du rotor de l'hélicoptère est maintenu tant que la manette de commande 52 reste dans sa position d'actionnement.

Lorsque le pilote ramène la manette 52 dans sa position de repos, le piston moteur 34 revient dans sa position initiale illustrée sur la figure 1. Un effet d'aspiration est ainsi créé dans la chambre de commande 38, qui se traduit par un recul du piston libre 28 d'une valeur correspondant au jeu existant entre le jonc 50 et la gorge dans laquelle ce jonc est reçu sur le piston 28. L'écartement conjoint des garnitures de friction 22a et 22b est assuré par le ressort 48. Dans ces conditions de repos, la communication du réservoir 44 avec la chambre de commande 38 permet de compenser automatiquement toute variation de volume de cette dernière.

Il est à noter que la manoeuvre de la manette de commande 52 est facilitée par l'effet amplificateur obtenu grâce à l'actionneur hydraulique, sans que du fluide hydraulique ne se trouve au-dessus de la cabine de pilotage de l'hélicoptère. Les risques liés à une fuite de fluide hydraulique dans cette zone sont ainsi évités.

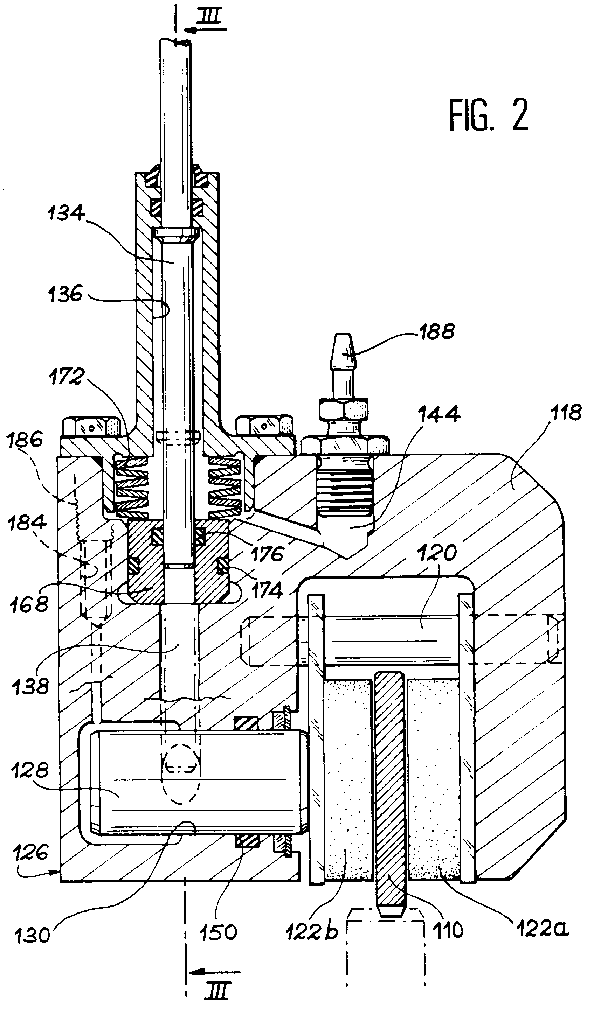

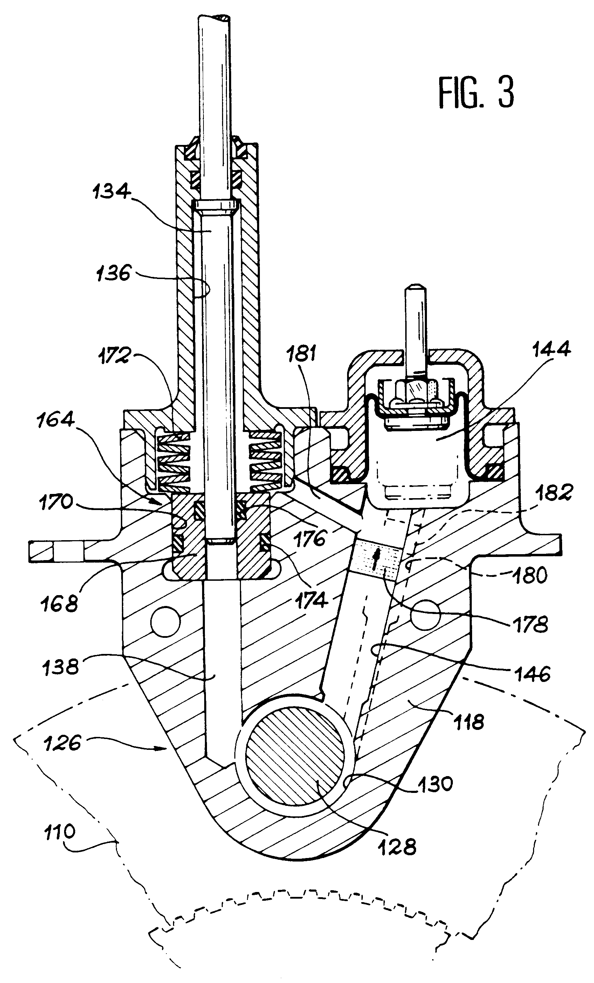

Un deuxième mode de réalisation de l'invention va à présent être décrit en se référant aux figures 2 et 3.

Dans ce deuxième mode de réalisation de l'invention, les éléments identiques ou comparables à ceux du premier mode de réalisation sont désignés par les mêmes références, augmentées de 100.

Comme dans le premier mode de réalisation, l'ensemble de freinage illustré sur les figures 2 et 3 comprend un disque 110, lié en rotation à un arbre lui-même solidaire en rotation de la chaîne cinématique d'entraînement des rotors de l'hélicoptère, tout en étant libre de se déplacer parallélement à son axe. Un organe support 118 en forme d'étrier est solidarisé d'une partie fixe de l'hélicoptère et chevauche le disque 110. Cet organe support 118 assure le support et l'ancrage de deux garnitures de friction 122a et 122b en vis-à-vis de chacune des faces du disque 110 par l'intermédiaire de deux broches 120.

On retrouve également dans ce deuxième mode de réalisation de l'invention un actionneur hydraulique 126, à amplification d'effort, intégré à l'organe support 118 et comportant principalement un piston libre 128, monté dans un alésage 130 de façon à presser directement la garniture de friction 122b contre la face adjacente du disque 110 et un piston moteur 134 reçu dans un alésage 136 orienté, comme précédemment, selon une direction perpendiculaire à celle de l'alésage 130. Comme l'illustre plus précisément la figure 3, les alésages 130 et 136 sont tangents l'un à l'autre et définissent entre les pistons 128 et 134 une chambre de commande 138 remplie de fluide hydraulique. Comme dans le premier mode de réalisation, la section du piston libre 128 est supérieure à celle du piston moteur 134, de façon à conférer à l'actionneur hydraulique 126 un effet d'amplification de l'effort appliqué sur le piston moteur 134. Le recul du piston libre 128 est également contrôlé par un jonc 150, reçu avec jeu dans une gorge formée sur ce piston.

Sur les figures 2 et 3, la manette de commande ainsi que les moyens de transmission mécaniques entre cette manette et le piston moteur 134 n'ont pas été représentés. Cependant, ces deux éléments sont identiques à ceux qui ont été décrits précédemment en se référant à la figure 1, à l'exception des moyens limiteurs d'efforts 164, qui ne sont plus placés dans ce cas sur les moyens de transmission mécaniques, mais intégrés à l'organe support 118, comme l'actionneur hydraulique 126.

Plus précisément, ces moyens limiteurs d'efforts 164 comprennent dans ce cas un piston annulaire 168, reçu de façon coulissante dans un alésage 170 formé dans l'organe support 118, coaxialement à l'alésage 136. Un empilement de rondelles élastiques 172, également logé dans l'alésage 170, prend appui à la fois sur le piston annulaire 168 et sur une extrémité opposée de l'alésage 170, pour appliquer normalement le piston 168 contre l'extrémité de l'alésage 170 la plus proche de la chambre de commande 138, comme l'illustrent les figures 2 et 3.

L'étanchéité du coulissement du piston annulaire 168 dans l'alésage 170 est assurée par un joint d'étanchéité annulaire 174 reçu dans une gorge formée sur la surface extérieure du piston 168. Comme l'illustre également la figure 3, l'extrémité du piston moteur 134 tournée vers la chambre de commande 138 est reçue de façon coulissante dans le piston annulaire 168, quelles que soient les positions occupées respectivement par les pistons 134 et 168. L'étanchéité de ce coulissement est assurée par un joint d'étanchéité annulaire 176 logé dans une gorge formée dans la surface intérieure du piston annulaire 168.

Le mode de réalisation illustré sur les figures 2 et 3 se distingue aussi du mode de réalisation de la figure 1 par le fait que le réservoir 144 est également intégré à l'organe support 118. Dans ce cas, le passage 146 reliant le réservoir 144 à la chambre de commande 138 est usiné directement dans l'organe support 118 et débouche dans l'alésage 130, comme l'illustre la figure 3. La communication entre le réservoir 144 et la chambre 138 est contrôlée par un clapet de surpression 178 placé dans le passage 146. L'ouverture de ce clapet 178 intervient lorsque la pression dans la chambre de commande 138 excède une valeur prédéterminée, supérieure à la pression provoquant le recul du piston annulaire 168 à l'encontre de l'action des rondelles élastiques 172.

Comme le montre la figure 3, un deuxième passage 180 est formé parallèlement au passage 146 entre le réservoir 144 et la chambre de commande 138. Ce passage 180, qui débouche également dans l'alésage 130, est équipé intérieurement d'un clapet anti-retour 182 conçu pour autoriser un passage de fluide du réservoir 144 vers la chambre 138 lorsqu'une dépression dans cette dernière atteint un seuil prédéterminé.

En outre, on voit sur la figure 3 que le réservoir 144 communique en permanence, par un passage 181, avec la partie de l'alésage 170 contenant l'empilement de rondelles élastiques 172.

Pour compléter la description de l'ensemble de freinage illustré sur les figures 2 et 3, on voit sur la figure 3 que la chambre de commande 138 peut communiquer avec l'extérieur par un passage 184, normalement obturé par un robinet à pointeau 186. En outre, le réservoir 144 peut communiquer avec l'extérieur par une vis de purge 188 (figure 2) normalement fermée.

Le fonctionnement de l'ensemble de freinage qui vient d'être décrit va à présent être expliqué.

Comme dans le premier mode de réalisation de l'invention, un actionnement de la manette de commande placée dans le poste de pilotage de l'hélicoptère a pour effet un déplacement du piston moteur 134 dans son alésage 136, vers le bas en considérant les figures 2 et 3. Ce déplacement est transmis au piston libre 128 par le fluide hydraulique contenu dans la chambre 138, de telle sorte que les garnitures de friction 122a et 122b sont appliquées contre les deux faces du disque 110 et assurent le freinage du rotor.

Au cours de cette phase d'actionnement, la descente du piston moteur 134 se poursuit alors que l'effort de freinage est déjà exercé sur le disque 110. Par conséquent, la pression dans la chambre 138 augmente et le piston annulaire 168 recule alors vers le haut à l'encontre de l'action exercée par les rondelles ressorts 172.

Lorsque la course vers le bas du piston 134 se poursuit alors que le piston annulaire 168 arrive lui-même en butée, le clapet de surpression 178 s'ouvre et le fluide hydraulique en excès s'échappe de la chambre de commande 138 dans le réservoir 144.

L'ensemble de freinage reste dans cet état tant que la manette de commande est maintenue dans sa position de freinage. Le blocage du rotor est ainsi assuré, notamment en cas de vent.

Lorsque la manette de commande est ramenée dans sa position de repos, le piston moteur 134 revient dans sa position illustrée sur les figures 2 et 3. Le piston annulaire 168, poussé par les rondelles ressorts 172, revient alors en butée comme l'illustrent également les figures 2 et 3. Ce mouvement s'accompagne d'un recul du piston libre 128 de la valeur autorisée par le jonc 150, dont la fonction est comparable à celle du jonc 50 dans le premier mode de réalisation de l'invention.

Dans la dernière phase de recul du piston moteur 134, le clapet anti-retour 182 s'ouvre et permet à la chambre de commande 138 de se remplir de fluide hydraulique en provenance du réservoir 144, pour compenser la dépression qui tend alors à se former dans la chambre 138.

Comme le montre la description qui précède, le rattrapage de l'usure des garnitures de friction 122a et 122b est automatique. En effet, lors de chaque freinage, le déplacement total du piston libre 128 est égal au déplacement dû au rattrapage du jeu entre le disque 110 et les garnitures 122a et 122b, augmenté du déplacement correspondant à l'usure des garnitures et du disque. Lorsque le frein est relâché, le piston libre 128 ne recule que du jeu constant entre le disque et les garnitures déterminé par le jonc 150. Le piston 128 avance peu à peu à chaque freinage et le volume de fluide hydraulique nécessaire est apporté par le réservoir 144 au travers du clapet anti-retour 182.

Dans le premier mode de réalisation de l'invention, la protection thermique de l'actionneur hydraulique 26 était assurée par l'élément 32 interposé entre le piston libre 28 et la garniture de friction 22b. Une solution comparable pourrait être adoptée dans ce deuxième mode de réalisation. Cependant, dans l'exemple illustré sur les figures 2 et 3, c'est le piston libre 128 qui est directement réalisé en un matériau thermiquement isolant tel qu'une céramique.

Pour effectuer le remplacement des garnitures de friction 122a et 122b, le frein est déposé et le robinet 186 est ouvert afin de permettre le recul du piston libre 128. Cette opération permet au fluide hydraulique qui se trouve dans la chambre de commande 138 de retourner dans le réservoir 144 avec un effort minimal.

Après le montage des garnitures neuves, le remplissage du frein en fluide hydraulique est assuré par gravité à travers le trou du robinet 186, après avoir ôté celui-ci. La vis de purge 188 permet alors à l'air contenu dans le circuit de s'échapper.

Bien entendu, l'invention n'est pas limitée aux modes de réalisation qui viennent d'être décrits à titre d'exemple, mais en couvre toute les variantes. Ainsi, au lieu d'être supporté de façon mobile parallèlement à son axe, le disque de frein peut être fixé directement sur un arbre lié à la boite de transmission principale de l'hélicoptère. L'organe support peut alors être soit monté coulissant parallèlement à cet axe, soit également fixe mais équipé de deux actionneurs hydrauliques opposés situés de part et d'autre du disque. De façon comparable, le support et l'ancrage des garnitures de friction sur l'organe support peuvent être réalisés différemment.

## Revendications

1. Ensemble de freinage de rotor de giravion, comprenant un disque (10) apte à tourner avec le rotor, au moins une garniture de friction (22a, 22b) ancrée sur un organe support (18) non rotatif, des moyens de freinage (26) aptes à appliquer la garniture de friction contre au moins une face du disque, un organe de commande (52) placé dans le poste de pilotage du giravion, et des moyens de transmission (54) reliant l'organe de commande aux moyens de freinage, caractérisé par le fait que les moyens de transmission (54) sont mécaniques et par le fait que les moyens de freinage comprennent au moins un actionneur hydraulique (26) à amplification d'effort, intégré audit organe support (18).

2. Ensemble de freinage selon la revendication 1, caractérisé par le fait que l'actionneur hydraulique (26) comporte un piston moteur (34) directement lié aux moyens de transmission mécaniques (54), un piston libre (28) agissant sur ladite garniture de friction et ayant une section supérieure à celle du piston moteur, et une chambre de commande (38) formée dans ledit organe support (18) entre le piston moteur et le piston libre.

3. Ensemble de freinage selon la revendication 2, caractérisé par le fait qu'il comprend un réservoir (44) de fluide hydraulique, apte à communiquer avec la chambre de commande (38) par au moins un passage (46).

4. Ensemble de freinage selon la revendication 3, caractérisé par le fait que le réservoir (44) est intégré à l'organe support (18).

5. Ensemble de freinage selon l'une quelconque des revendications précédentes, caractérisé par le fait qu'il comprend des moyens limiteurs d'efforts (64), interposés entre l'organe de commande (52) et la garniture de friction (22b).

6. Ensemble de freinage selon la revendication 5, combinée avec l'une quelconque des revendications 3 et 4, caractérisé par le fait que les moyens limiteurs d'efforts (64) sont placés dans les moyens de transmission mécaniques (54) et par le fait que ledit passage (46) est obturé par le piston moteur (34) lorsque ce dernier n'est pas dans une position de relâchement du frein.

7. Ensemble de freinage selon la revendication 5, combinée avec l'une quelconque des revendications 3 et 4, caractérisé par le fait que les moyens limiteurs d'efforts (164) sont intégrés à l'actionneur hydraulique (126) et par le fait que ledit passage (146) comporte un clapet de surpression (178) à ouverture automatique lorsque la pression dans la chambre de commande (138) atteint une valeur supérieure à une pression d'actionnement des moyens limiteurs d'efforts (164).

8. Ensemble de freinage selon la revendication 7, caractérisé par le fait que les moyens limiteurs d'efforts (164) comprennent un troisième piston (168) soumis aux actions antagonistes de la pression régnant dans la chambre de commande (138) et de moyens élastiques (172).

9. Ensemble de freinage selon l'une quelconque des revendications 7 et 8, caractérisé par le fait que la chambre de commande (138) communique avec le réservoir (144) par un second passage (180) normalement fermé par un clapet anti-retour (182) autorisant un passage de fluide hydraulique du réservoir dans la chambre de commande lorsque la pression dans cette dernière descend en dessous d'un seuil inférieur à une dépression prédéterminée.

10. Ensemble de freinage selon l'une quelconque des revendications précédentes, caractérisé par le fait qu'un élément thermiquement isolant (32) est interposé entre l'actionneur hydraulique (26) et la garniture de friction (22b).

11. Ensemble de freinage selon l'une quelconque des revendications 2 à 9, caractérisé par le fait que le piston libre (128) est réalisé en un matériau thermiquement isolant.

12. Ensemble de freinage selon l'une quelconque des revendications précédentes, caractérisé par le fait que l'organe support est un étrier fixe (18) chevauchant le disque (10), ce dernier étant monté coulissant selon son axe, l'étrier supportant un actionneur hydraulique (26) agissant directement sur une première garniture de friction (22b) adjacente à une première face du disque et, par l'intermédiaire du disque coulissant, sur une deuxième garniture de friction (22a) adjacente à la deuxième face du disque.

## Claims

1. Gyroplane rotor braking unit comprising a disk (10) able to rotate with the rotor, at least one friction lining (22a, 22b) anchored on a non-rotary support (18) member, braking means (26) able to apply the friction lining to at least one face of the disk, a control member (52) located in the gyroplane cockpit and transmission means (54) connecting the control member to the braking means, characterized in that the transmission means (54) are mechanical and the braking means comprise at least one force amplification hydraulic actuator (26) integrated into said support member (18).

2. Braking unit according to claim 1, characterized in that the hydraulic actuator (26) has a motor piston (34) directly to mechanical transmission means (54), a free piston (28) acting on said friction lining and having a section larger than that of the motor piston, and a control chamber (38) formed in said support member (18) between the motor piston and the free piston.

3. Braking unit according to claim 2, characterized in that it comprises a hydraulic fluid tank (44) able to communicate with the control chamber (38) by at least one passage.

4. Braking unit according to claim 3, characterized in that the tank (44) is integrated into the support member (18).

5. Braking unit according to any one of the preceding claims, characterized in that it comprises force limiting means (64) interposed between the control member (52) and the friction lining (22b).

6. Braking unit according to claim 5, combined with either of the claims 3 and 4, characterized in that the force limiting means (64) are placed in the mechanical transmission means (54) and that said passage (46) is sealed by the motor piston (34) when the latter is not in the brake release position.

7. Braking unit according to claim 5, combined with either of the claims 3 and 4, characterized in that the force limiting means (164) are integrated into the hydraulic actuator (126)) and that said passage (146) has a pressure relief valve (178) which opens automatically when the pressure in the control chamber (138) reaches a value above the actuating pressure of the force limiting means (164).

8. Braking unit according to claim 7, characterized in that the force limiting means (164) comprise a third piston (168) subject to the opposing actions of the pressure prevailing in the control chamber (138) and elastic means (172).

9. Braking unit according to either of the claims 7 and 8, characterized in that the control chamber (138) is linked with the tank (144) by a second passage (180) normally closed by a check valve (182) allowing a hydraulic fluid passage from the tank into the control chamber when the pressure in the latter drops below a threshold below a predetermined vacuum.

10. Braking unit according to any one of the preceding claims, characterized in that a thermally insulating element (32) is interposed between the hydraulic actuator (26) and the friction lining (22b).

11. Braking unit according to any one of the claims 2 to 9, characterized in that the free piston (128) is made from a thermally insulating material.

12. Braking unit according to any one of the preceding claims, characterized in that the support member is a fixed bracket (18) overlapping the disk (10), the latter being mounted so as to slide along its axis, the bracket supporting a hydraulic actuator (26) acting directly on a first friction lining (22b) adjacent to a first face of the disk and, via the sliding disk, on a second friction lining (22a) adjacent to the second face of the disk.

## Patentansprüche

1. Bremsanlage mit Drehflügelrotor, die eine Scheibe (10), die sich mit dem Rotor drehen kann, mindestens einen Reibbelag (22a, 22b), der an einer nicht drehbaren Haltevorrichtung (18) befestigt ist, Bremsvorrichtungen (26), die in der Lage sind, den Bremsbelag gegen mindestens eine Fläche der Scheibe zu drücken, ein Bedienteil (52), das sich in dem Drehflüglercockpit befindet, sowie Übertragungsvorrichtungen (54), die das Bedienteil mit den Bremsvorrichtungen verbinden, umfaßt, dadurch gekennzeichnet, daß die Übertragungsvorrichtungen (54) mechanisch sind, und dadurch, daß die Bremsvorrichtungen mindestens eine hydraulische Stellvorrichtung (26) mit einer Kraftverstärkung enthalten, die in das genannten Bedienteil (18) integriert ist.

2. Bremsanlage nach Anspruch 1, dadurch gekennzeichnet, daß die hydraulische Stellvorrichtung (26) einen Motorkolben (34), der direkt mit den mechanischen Übertragungsvorrichtungen (54) verbunden ist, einen frei beweglichen Kolben (28), der auf den genannten Reibbelag einwirkt und dessen Querschnitt größer ist als der des Motorkolbens, sowie eine Steuerkammer (38) besitzt, die zwischen dem Motorkolben und dem freien Kolben in die genannte Haltvorrichtung (18) eingearbeitet ist.

3. Bremsanlage nach Anspruch 2, dadurch gekennzeichnet, daß sie einen Hydraulikflüssigkeitsbehälter (44) enthält, der mindestens über einen Kanal (46) mit der Steuerkammer (38) in Verbindung steht.

4. Bremsanlage nach Anspruch 3, dadurch gekennzeichnet, daß der Behälter (44) in der Haltevorrichtung (18) integriert ist.

5. Bremsanlage nach einem der vorangegangenen Ansprüche, dadurch gekennzeichnet, daß diese mit Lastbegrenzern (64) ausgestattet ist, die zwischen das Bedienteil (52) und den Reibbelag (22b) geschaltet sind.

6. Bremsanlage nach Anspruch 5 in Verbindung mit einem der Ansprüche 3 und 4, dadurch gekennzeichnet, daß die Lastbegrenzer (64) in den mechanischen Übertragungsvorrichtungen (64) untergebracht sind, sowie dadurch, daß der genannte Kanal (46) durch den Motorkolben (34) verschlossen wird, wenn letzterer sich nicht in der Position befindet, in der die Bremsen gelockert sind.

7. Bremsanlage nach Anspruch 5 in Verbindung mit einem der Ansprüche 3 und 4, dadurch gekennzeichnet, daß die Lastbegrenzer (164) in der hydraulischen Stellvorrichtung (126) integriert sind, sowie dadurch, daß der genannte Kanal (146) ein Überdruckventil (178) enthalt, daß sich automatisch öffnet, wenn der Druck in der Steuerkammer (138) einen Wert erreicht, der über dem Wert des Ansteuerungsdruckes der Lastbegrenzer (164) liegt.

8. Bremsanlage nach Anspruch 7, dadurch gekennzeichnet, daß die Lastbegrenzer (164) einen dritten Kolben (168) enthalten, der den entgegengerichteten Wirkungen des Druckes, der in der Steuerkammer (138) herrscht, und der elastischen Vorrichtungen (172) ausgesetzt ist.

9. Bremsanlage nach einem der Ansprüche 7 und 8, dadurch gekennzeichnet, daß die Steuerkammer (138) mit dem Behälter (144) über einen Kanal (180) verbunden ist, der in der Regel durch ein Rückschlagventil (182) geschlossen ist und den Durchfluß einer Hydraulikflüssigkeit aus dem Behälter in die Steuerkammer freigibt, wenn der Druck in dieser Kammer unter einen Schwellwert sinkt, der niedriger ist als ein vorgegebener Unterdruck.

10. Bremsanlage nach einem der vorangegangenen Ansprüche, dadurch gekennzeichnet, daß sich zwischen dem hydraulischen Stellglied (26) und dem Reibbelag (22b) ein wärmeisolierendes Element (32) befindet.

11. Bremsanlage nach einem der Ansprüche 2 bis 9, dadurch gekennzeichnet, daß der frei bewegliche Kolben (128) in einem wärmeisolierenden Material ausgeführt ist.

12. Bremsanlage nach einem der vorangegangenen Ansprüche, dadurch gekennzeichnet, daß die Haltevorrichtung ein fester Bügel (18) ist, der die Scheibe (10) überlappt, wobei letztere in bezug auf ihre Achse gleitbar montiert ist und der Bügel ein hydraulisches Stellglied (26) stützt, das direkt auf den ersten Reibbelag (22b), der sich neben der ersten Fläche der Scheibe befindet, und über die Gleitscheibe auf den zweiten Reibbelag (22a), der sich neben der zweiten Fläche der Scheibe befindet, einwirkt.
